# EUROPEAN PATENT APPLICATION

(11) **EP 4 826 895 A1**
(43) Date of publication of application: **21.10.2026**
(21) Application number: 24938216.9
(22) Date of filing: 14.05.2024
(51) Int. Cl.: H01M 50/55, H01M 50/30

(54) **BATTERY CELL, BATTERY AND ELECTRICAL APPARATUS**

(71) Applicant: Contemporary Amperex Technology Co., Limited, Ningde, Fujian 352100 (CN)
(72) Inventor: WU, Guangjin, Ningde, Fujian 352100 (CN); XIE, Chengbin, Ningde, Fujian 352100 (CN); GUO, Zhijun, Ningde, Fujian 352100 (CN); MA, Ruoyan, Ningde, Fujian 352100 (CN); LIN, Junyi, Ningde, Fujian 352100 (CN)
(74) Representative: Aera A/S
(86) International application number: PCT/CN2024/093166
(87) International publication number: WO 2025/236180

(57) **Abstract**

Embodiments of the present application provide a battery cell, a battery and an electrical apparatus, wherein the battery cell comprises: a casing (1), comprising a first wall (12), wherein the first wall (12) is provided with a pressure relief component (2); an electrode assembly (3) arranged in the casing (1), wherein the electrode assembly (3) comprises an electrode body (31) and a first tab (32), and the first tab (32) is led out from one end of the electrode body (31); and a first current collector (4), configured to electrically connect the first tab (32) and the casing (1), wherein the first current collector (4) is at least partially located between the first tab (32) and the pressure relief component (2), the first current collector (4) is provided with at least one ventilation part (41) and at least one guide part (42), the ventilation part (41) penetrates through the first current collector (4) in the thickness direction of the first wall (12), and the guide part (42) is arranged in the peripheral area of the ventilation part (41).

## Description

### TECHNICAL FIELD

The present application relates to the technical field of batteries, and in particular, to a battery cell, a battery, and an electric device.

### BACKGROUND

In recent years, new energy vehicles have developed by leaps and bounds. In the field of electric vehicles, power batteries, as the power source of electric vehicles, play an irreplaceable role. With vigorous promotion of new energy vehicles, the demand for power battery products is increasingly growing. Batteries, as core components of new energy vehicles, are subject to high requirements in terms of use safety.

However, how to improve the safety of batteries during use has always been a challenge in the industry.

### SUMMARY

An objective of the present application is to improve the operation safety of batteries.

According to a first aspect of the present application, a battery cell is provided. The battery cell includes:
a shell, including a first wall, where the first wall is provided with a pressure relief component;
an electrode assembly, disposed in the shell, where the electrode assembly includes an electrode main body and a first tab, and the first tab is led out from one end of the electrode main body; and
a first flow collecting member, configured to electrically connect the first tab to the shell, where the first flow collecting member is at least partially located between the first tab and the pressure relief component; the first flow collecting member is provided with at least one venting part and at least one guiding part, the venting part penetrates through the first flow collecting member in a thickness direction of the first wall, and the guiding part is disposed in an outer peripheral region of the venting part.

In the embodiments, the first flow collecting member close to the pressure relief component is provided with the venting part and the guiding part, such that during pressure relief, the guiding part weakens the structural strength of the first flow collecting member, and when the air pressure is high, the first flow collecting member can be guided to crack according to a preset path to cause deformation or damage, thereby increasing the gas discharge area. The gas can be discharged simultaneously through the venting part and the guiding part, such that the ventilation area when the gas in the electrode assembly reaches the pressure relief component is increased, thereby preventing blockage during pressure relief, enabling the gas to reach the pressure relief component more smoothly to be discharged out of the battery cell, enabling the air pressure inside and outside the battery cell to be balanced, allowing the heat to be discharged in time, and thus improving the safety of the battery cell during use.

In some embodiments, the guiding part includes at least one of a through hole or a score.

In the embodiments, the guiding part is configured as a through hole. In the case of thermal runaway, it is easier for the gas to directly enter the through hole from the venting part, so as to rapidly diffuse to the surrounding region, which is conducive to increasing the gas discharge speed. When the air pressure inside the battery cell is relatively low, the through hole can also fully play its role, thereby enabling the gas to reach the pressure relief component more smoothly for discharge, enabling the air pressure inside and outside the battery cell to be balanced, and thus improving the safety of the battery cell during use.

Alternatively, the guiding part is configured as a score, such that the weakening of the strength of the first flow collecting member can be reduced, which is conducive to ensuring the strength of the first flow collecting member. In addition, in the case of thermal runaway, a strength reduced region is formed at the score, and the first flow collecting member may crack along the score, or may further deform at the score. For example, two sides of the score are at different heights, such that the gas discharge area can be effectively increased, thereby enabling the gas to reach the pressure relief component more smoothly for discharge, enabling the air pressure inside and outside the battery cell to be balanced, and thus improving the safety of the battery cell during use.

In some embodiments, the guiding part extends in a radial direction of the first flow collecting member.

In the embodiments, the guiding part extends in the radial direction of the first flow collecting member, which is conducive to guiding the gas from a central region of the first flow collecting member to the outer periphery, such that the gas can be quickly released to prevent accumulation. As a result, the gas pressure near the venting part can be reduced, and the gas discharge speed can be increased, thereby enabling the gas to reach the pressure relief component more smoothly to be discharged out of the battery cell, enabling the air pressure inside and outside the battery cell to be balanced, and thus improving the safety of the battery cell during use.

In addition, for a wound electrode assembly, the first tab is of a multi-layer structure. To ensure that each layer of tab can be reliably welded, at least part of the weld mark is disposed in a radial direction. Such a guiding part facilitates disposing the weld mark on the first flow collecting member.

In some embodiments, the at least one guiding part includes a first guiding part, and a first end, close to the venting part, of the first guiding part is in communication with the venting part.

In the embodiments, after the gas reaches the venting part from a central hole of the electrode assembly, the gas can directly act on the first end of the guiding part, which is beneficial for the first flow collecting member to deform or crack under the guidance of the guiding part, such that the gas directly enters the guiding part along the communication position between the guiding part and the venting part, thereby substantially achieving simultaneous gas discharge through the venting part and the guiding part in communication with the venting part, and increasing the gas discharge speed.

In some embodiments, two first guiding parts are located on a same straight line, and first ends, close to the venting part, of the two first guiding parts are both in communication with the venting part.

In the embodiments, two first guiding parts are located on the same straight line. After the gas reaches the venting part from the central hole of the electrode assembly, the deformed or cracked region, for gas discharge, on the first flow collecting member is symmetrical, thereby enabling the gas of the first flow collecting member in the circumferential direction to be evenly distributed, preventing the pressure rise caused by the gas accumulation on the same side, enabling the gas to reach the pressure relief component more smoothly for discharge, and enabling the air pressure inside and outside the battery cell to be balanced.

In some embodiments, the at least one guiding part includes a second guiding part, and a preset spacer part is disposed between a first end, close to the venting part, of the second guiding part and a side wall of the venting part.

In the embodiments, on the basis of increasing the gas discharge area by providing the guiding part, the preset spacer part is disposed between the second guiding part and the venting part, which is conducive to improving the structural strength of the first flow collecting member.

In some embodiments, two second guiding parts are located on a same straight line, and a preset spacer part is disposed between the first end of each of the two second guiding parts and the side wall of the venting part.

In the embodiments, two second guiding parts are located on the same straight line, and the preset spacer parts are disposed at the positions opposite to the venting part, such that the structural symmetry of the first flow collecting member can be improved, and the strength is more evenly distributed, which is conducive to ensuring the structural strength of the first flow collecting member in the case where the battery cell operates normally and improving the reliability of the electrical connection between the first flow collecting member and the first tab.

In some embodiments, the preset spacer part is configured to be ruptured in the case where an air pressure in the shell exceeds a preset threshold.

In the embodiments, the second guiding part is conducive to ensuring the structural strength of the first flow collecting member in the case where the battery cell operates normally, and can also cause rupture to the preset spacer part in the case where the battery cell undergoes thermal runaway, such that the gas reaches the second guiding part more easily from the venting part, thereby increasing the gas discharge area and facilitating the smooth discharge of the internal gas.

In some embodiments, a length of the preset spacer part is less than 15 mm, and a thickness of the preset spacer part is less than 2 mm.

In the embodiments, by limiting the length and the thickness of the preset spacer part, it can be ensured that the preset spacer part reliably cracks in the case where the battery cell undergoes thermal runaway. After reaching the venting part from the central hole of the electrode assembly, the gas can enter the second guiding part smoothly, thereby increasing the ventilation area, enabling the gas to reach the pressure relief component more quickly for discharge, enabling the air pressure inside and outside the battery cell to be balanced, and improving the safety of the battery cell during thermal runaway.

In some embodiments, a plurality of guiding parts are spaced apart from each other in a circumferential direction of the first flow collecting member.

In the embodiments, the plurality of guiding parts are spaced apart from each other in the circumferential direction of the first flow collecting member, which can improve the uniformity of gas discharge in the entire circumferential direction of the first flow collecting member, fully utilize different positions in the circumferential direction to discharge gas, and increase the gas discharge speed, such that the gas can reach the pressure relief component more smoothly to be discharged out of the battery cell.

In some embodiments, the plurality of guiding parts are centrosymmetrically disposed relative to a center of the first flow collecting member.

In the embodiments, the plurality of guiding parts can be more uniformly distributed on the first flow collecting member, which can not only enable the structural strength at each part of the first flow collecting member to be uniform, but also enable the gas discharge region to be uniformly distributed, while ensuring the reliability of the electrical connection between the first flow collecting member and the first tab and the gas discharge uniformity.

In some embodiments, a distance between second ends, away from the venting part, of two guiding parts located on a same straight line is L, a maximum radial dimension of the first flow collecting member is D, and L = 0.1D to 0.8D.

In the embodiments, the length of the guiding part is designed based on the diameter of the first flow collecting member, such that the guiding part can meet the gas discharge speed requirement while ensuring the structural strength of the first flow collecting member.

In some embodiments, a thickness of a region, where the guiding part is disposed, of the first flow collecting member is T, a width of the guiding part is W, and W = T to 5T.

In the embodiments, the width of the guiding part is designed based on the thickness of the region, where the guiding part is disposed, of the first flow collecting member, such that the width of the guiding part is not less than the thickness. This can ensure that the guiding part easily cracks during pressure relief and can effectively increase the ventilation area, and the width of the guiding part is not greater than 5 times the thickness, thereby ensuring the structural strength of the first flow collecting member.

In some embodiments, the first flow collecting member is provided with a positioning hole at a second end away from the venting part.

In the embodiments, the positioning hole is provided, which can not only further increase the gas discharge area, but also provide a positioning effect in the stacking process after the first flow collecting member is processed, to prevent deflection. During the assembly of the battery cell, when an automated pickup apparatus acquires the first flow collecting member and places the first flow collecting member at an end part of the first tab, for example, when the first flow collecting member is sucked by a negative pressure mouthpiece, the guiding part of each first flow collecting member can be at the same circumferential position, such that the first flow collecting member and the first tab of each battery cell can be welded according to a preset welding trajectory without the need to readjust the welding trajectory, which can improve the assembly efficiency of the battery cell.

In addition, compared with the mode of positioning through the outer periphery of the first flow collecting member, positioning through the positioning hole makes it easier to ensure the processing precision due to the small dimension of the positioning hole, thereby improving the positioning precision. In addition, the positioning hole is provided at the second end of the guiding part, and the distance between the positioning hole and the center is relatively large, which can improve the positioning effect.

In some embodiments, the at least one guiding part includes a plurality of guiding parts extending in the radial direction of the first flow collecting member, and two guiding parts of the plurality of guiding parts are located on a same straight line; two positioning holes are provided, and the two positioning holes are respectively disposed at the second ends of the two guiding parts on the same straight line.

In the embodiments, the positioning hole is provided only at the second end of each of the two guiding parts located on the same straight line, such that a difference can be present between the plurality of guiding parts. Therefore, the positioning effect can be better achieved to prevent deflection, and the weakening influence of providing the positioning hole on the strength of the first flow collecting member can also be reduced.

In some embodiments, the positioning hole is a circular hole; the thickness of the region, where the guiding part is disposed, of the first flow collecting member is T, a diameter of the circular hole is d, and d = 4T to 10T.

In the embodiments, the diameter of the positioning hole is designed based on the thickness of the region, where the guiding part is disposed, of the first flow collecting member, such that the diameter of the positioning hole is not less than 4 times the thickness of the first flow collecting member, which can ensure that the dimension of the positioning hole facilitates positioning. In addition, the diameter of the positioning hole is not greater than 10 times the thickness of the first flow collecting member, which can ensure the structural strength of the first flow collecting member 4.

In some embodiments, the venting part is a polygon, and a first end, close to the venting part, of the guiding part is aligned with a folded corner region of the venting part.

In the embodiments, when the battery cell undergoes thermal runaway and the internal gas is released, the acting force acting on the first flow collecting member can generate stress concentration in the folded corner region of the venting part, so as to tear the first flow collecting member from the folded corner of the venting part. The first end of the guiding part close to the venting part is aligned with the folded corner region of the venting part, such that the acting force generated by the cracking of the folded corner region can be further transmitted to the first end of the guiding part, enabling the first flow collecting member to deform or crack in the guiding part region, which can increase the ventilation area of the first flow collecting member during thermal runaway, reduce the blocking of gas, improve the gas discharge smoothness and gas discharge efficiency, reduce the risk of fire and explosion of the battery cell caused by unsmooth pressure relief, and improve the use safety of the battery cell.

In some embodiments, a plurality of guiding parts are provided, and the number of the guiding parts is the same as the number of folded corners of the polygon; the plurality of guiding parts are disposed in one-to-one correspondence with a plurality of folded corners of the polygon.

In the embodiments, one guiding part is disposed at each position corresponding to the folded corner of the venting part, such that the stress concentration effect generated at each folded corner can be fully utilized to cause the first flow collecting member to further deform or crack along the guiding part, thereby increasing the ventilation area of the first flow collecting member as much as possible during thermal runaway and enabling smoother gas discharge.

In some embodiments, the first flow collecting member includes a shell connecting part and a tab connecting part made of different base materials, the shell connecting part and the first wall are made of a same base material, and the tab connecting part and the first tab are made of a same base material; the venting part and the guiding part are disposed on the tab connecting part.

In the embodiments, after the first wall is welded to the first flow collecting member, since the difference between the thermal expansion coefficient of the material of the shell connecting part and the thermal expansion coefficient of the material of the first wall does not exceed a preset threshold, the inconsistent contraction degrees of the two materials during cooling can easily cause welding cracks, thereby preventing the problem of liquid leakage and improving the operation reliability of the battery cell.

In some embodiments, the tab connecting part is welded to the first tab to form a weld mark, and the weld mark and the guiding part are spaced apart from each other in the circumferential direction.

In the embodiments, the weld mark and the guiding part are spaced apart from each other in the circumferential direction, which can prevent damage to the guiding part caused by the heat generated during welding, thereby ensuring the structural strength of the first flow collecting member during normal use.

In some embodiments, the venting part is disposed in a central region of the first flow collecting member.

In the embodiments, the venting part is disposed in the central region of the first flow collecting member, such that part of the gas discharged along the central hole of the electrode assembly can directly pass through the venting part to reach the pressure relief component, thereby reducing the pressure relief resistance during thermal runaway of the battery cell and improving the gas discharge efficiency. In addition, the venting part provided in the central region facilitates the cracking of the guiding part located in the outer peripheral region to cause deformation or damage during gas discharge, such that the venting part and the guiding part jointly achieve a better pressure relief effect. In some embodiments, the shell includes a shell body and an end cover, the shell body is provided with an opening, and the end cover closes the opening; the first wall is the end cover or a bottom wall of the shell body.

In the embodiments, the shell is formed by connecting the shell body and the end cover, which can facilitate the mounting of the internal structure.

In some embodiments, the first wall is the end cover, the bottom wall is provided with an electrode terminal, and the electrode terminal is insulated from the bottom wall; the electrode assembly further includes a second tab, the second tab is led out from the other end of the electrode main body, and the second tab and the first tab have opposite polarities; the battery cell further includes a second flow collecting member, and the second flow collecting member is configured to electrically connect the second tab to the electrode terminal.

In the battery cell according to the embodiments, the electrode terminal is disposed at an end away from the pressure relief component. In the case of thermal runaway, the discharged substances will be ejected from the end where the pressure relief component is located and move away from the electrode terminal, thereby moving away from a busbar member configured to electrically connect a plurality of battery cells, which can reduce the impact on the electrical connection of the battery cells during thermal runaway.

According to a second aspect of the present application, a battery is provided. The battery includes the battery cell according to the above embodiments.

According to a third aspect of the present application, an electric device is provided. The electric device includes the battery cell and/or the battery according to the above embodiments, where the battery cell and/or the battery is configured to provide electrical energy for the electric device.

### BRIEF DESCRIPTION OF THE DRAWINGS

To more clearly illustrate the technical solutions according to embodiments of the present application, the drawings required for illustrating the embodiments of the present application are briefly described below. Apparently, the drawings in the following description illustrate merely some embodiments of the present application, and those of ordinary skill in the art may still derive other drawings from these drawings without creative efforts.
FIG. 1 is a schematic structural diagram of some embodiments of a battery mounted on a vehicle according to the present application;
FIG. 2 is an exploded view of a first embodiment of a battery according to the present application;
FIG. 3 is an exploded view of some embodiments of a battery cell according to the present application;
FIG. 4 is a front view of some embodiments of a first flow collecting member in a battery cell according to the present application;
FIG. 5 is a cross-sectional view of FIG. 4 along line A-A;
FIG. 6 is a schematic structural diagram of a variant of FIG. 4; and
FIG. 7 is a schematic structural diagram of another variant of FIG. 4.

The drawings are not drawn to scale.

Description of the reference numerals:
100. battery cell;
1. shell; 10. shell body; 11. side wall; 12. first wall; 12'. end cover; 13. bottom wall;
2. pressure relief component;
3. electrode assembly; 31. electrode main body; 32. first tab; 33. second tab; 34. central hole;
4. first flow collecting member; 41. venting part; 42. guiding part; 421. first guiding part; 422. second guiding part; 42A. through hole; 42B. score; 423. preset spacer part; 424. positioning hole; 43. tab connecting part; 44. shell connecting part;
5. second flow collecting member;
6. electrode terminal;
200. battery; 201. case assembly; 201A. case; 201B. first cover body; 201C. second cover body;
300. vehicle; 301. vehicle axle; 302. wheel; 303. motor; 304. controller.

### DETAILED DESCRIPTION

Implementations of the present application will be described in further detail with reference to the drawings and embodiments. The following detailed description of the embodiments and the drawings are used for the exemplary illustration of the principles of the present application, but are not intended to limit the scope of the present application. That is, the present application is not limited to the described embodiments.

In the description of the embodiments of the present application, the term "plurality of" refers to two or more (including two). Similarly, "plurality of groups" refers to two or more (including two) groups, and "plurality of pieces" refers to two or more (including two) pieces.

The present application uses the description of orientations or positional relationships indicated by "upper", "lower", "top", "bottom", "front", "rear", "inner", "outer", and the like. The description is merely for the convenience of describing the present application, and is not intended to indicate or imply that the apparatus referred to must have a specific orientation or be constructed and operated in a specific orientation, and thus should not be construed as limiting the protection scope of the present application.

Furthermore, the terms "first", "second", "third", and the like are used for descriptive purposes only and should not be construed as indicating or implying relative importance. The "perpendicular" is not strictly perpendicular but is within the allowable range of error. The "parallel" is not strictly parallel but is within the allowable range of error. The following description is given with the directional terms as shown in the drawings and is not intended to limit the specific structure of the present application.

In the description of the present application, it should further be noted that unless otherwise explicitly specified or defined, the terms "mount", "interconnect", and "connect" shall be construed broadly and may be, for example, fixed connection, detachable connection, or integral connection, or direct connection or indirect connection via an intermediate. For those of ordinary skill in the art, the specific meaning of the above terms in the present application may be interpreted according to the specific condition.

Reference in the present application to "embodiment" means that a particular feature, structure, or characteristic described in combination with the embodiment may be included in at least some embodiments of the present application. The references of the word in the context of the specification do not necessarily refer to the same embodiment, nor to separate or alternative embodiments exclusive of other embodiments. It will be explicitly and implicitly understood by those skilled in the art that the embodiments described herein may be combined with other embodiments.

Currently, a battery cell generally includes a shell body and an electrode assembly accommodated in the shell body, and the shell body is filled with an electrolyte. The electrode assembly is mainly formed by stacking or winding a first electrode plate and a second electrode plate having opposite polarities, and an insulating member, such as a separator, is usually disposed between the first electrode plate and the second electrode plate. The parts of the first electrode plate and the second electrode plate that are coated with an active substance constitute the main body part of the electrode assembly, and the parts of the first electrode plate and the second electrode plate that are not coated with an active substance each constitute a first tab and a second tab. In the battery cell, the first electrode plate may be a positive electrode plate including a positive electrode flow collecting member and positive electrode active substance layers disposed on both sides of the positive electrode flow collecting member. A metal foil or a composite current collector may be used as a positive electrode current collector. For example, for the metal foil, aluminum or stainless steel treated with silver on the surface, stainless steel, copper, aluminum, nickel, carbon electrode, carbon, nickel, titanium, or the like may be used. The composite current collector may include a polymer material base layer and a metal layer. The composite current collector may be formed by forming a metal material (aluminum, aluminum alloy, nickel, nickel alloy, titanium, titanium alloy, silver, silver alloy, or the like) on a polymer material substrate (such as a substrate made of polypropylene, polyethylene terephthalate, polybutylene terephthalate, polystyrene, and polyethylene). The positive electrode active substance layer may include at least one of the following materials: a lithium-containing phosphate, a lithium transition metal oxide, and respective modified compounds thereof. However, the present application is not limited to these materials, and other conventional materials that can be used as positive electrode active materials for batteries may also be used. These positive electrode active materials may be used alone or in a combination of two or more. The second electrode plate may be a negative electrode plate including a negative electrode flow collecting member and negative electrode active substance layers disposed on both sides of the negative electrode flow collecting member. A metal foil or a composite current collector may be used as a negative electrode current collector. For example, for the metal foil, aluminum or stainless steel treated with silver on the surface, stainless steel, copper, aluminum, nickel, carbon electrode, carbon, nickel, titanium, or the like may be used. The composite current collector may include a polymer material base layer and a metal layer. The composite current collector may be formed by forming a metal material (copper, copper alloy, nickel, nickel alloy, titanium, titanium alloy, silver, silver alloy, or the like) on a polymer material substrate (such as a substrate made of polypropylene, polyethylene terephthalate, polybutylene terephthalate, polystyrene, and polyethylene). The negative electrode active substance layer may be any negative electrode active material known in the art for use in batteries. As an example, the negative electrode active material may include at least one of the following materials: artificial graphite, natural graphite, soft carbon, hard carbon, a silicon-based material, a tin-based material, lithium titanate, and the like. Optionally, the first electrode plate may also be a negative electrode plate, and correspondingly, the second electrode plate is a positive electrode plate. The first tab and the second tab may be located together at one end of the main body part or separately at two ends of the main body part. During the charging and discharging of the battery cell, the positive electrode active substance and the negative electrode active substance react with the electrolytic solution, and the tabs are connected to the electrode terminals to form a current circuit.

At present, the problem of poor safety still occurs during the use of a cylindrical battery cell. It has been found through research that the main reason for the poor safety of the battery cell is that after thermal runaway occurs, the high-temperature gas and active substance generated in the electrode assembly flow toward the pressure relief component through the through hole at the center of the flow collecting member, and are discharged through the pressure relief component at the end part of the shell. However, since the through hole at the center of the flow collecting member is small, when the internal air pressure of the battery cell is excessively high, unsmooth gas discharge may be caused, and the high pressure accumulated inside the battery cell cannot be relieved in time, thereby affecting the operation safety of the battery cell.

Based on the disadvantage of the above solution, the present application provides a battery cell. The battery cell includes: a shell, including a first wall, where the first wall is provided with a pressure relief component; an electrode assembly, disposed in the shell, where the electrode assembly includes an electrode main body and a first tab, and the first tab is led out from one end of the electrode main body; and a first flow collecting member, configured to electrically connect the first tab to the shell, where the first flow collecting member is at least partially located between the first tab and the pressure relief component, the first flow collecting member is provided with at least one venting part and at least one guiding part, the venting part penetrates through the first flow collecting member in a thickness direction of the first wall, and the guiding part is disposed in an outer peripheral region of the venting part.

In the battery cell according to the embodiments, the first flow collecting member close to the pressure relief component is provided with the venting part and the guiding part, such that during pressure relief, the guiding part weakens the structural strength of the first flow collecting member, and when the air pressure is high, the first flow collecting member can be guided to crack according to a preset path to cause deformation or damage, thereby increasing the gas discharge area. The gas can be discharged simultaneously through the venting part and the guiding part, such that the ventilation area when the gas in the electrode assembly reaches the pressure relief component is increased, thereby preventing blockage during pressure relief, enabling the gas to reach the pressure relief component more smoothly to be discharged out of the battery cell, enabling the air pressure inside and outside the battery cell to be balanced, allowing the heat to be discharged in time, and thus improving the safety of the battery cell during use.

The battery cell according to the embodiments of the present application is applicable to a battery and an electric device that uses such a battery cell, and the battery is also applicable to the electric device.

The battery according to the embodiments of the present application can be used in an electric device. The electric device may be an electric bicycle, an electric vehicle, a ship, a spacecraft, or the like. For example, the spacecraft includes an airplane, a rocket, a space shuttle, a spaceship, and the like.

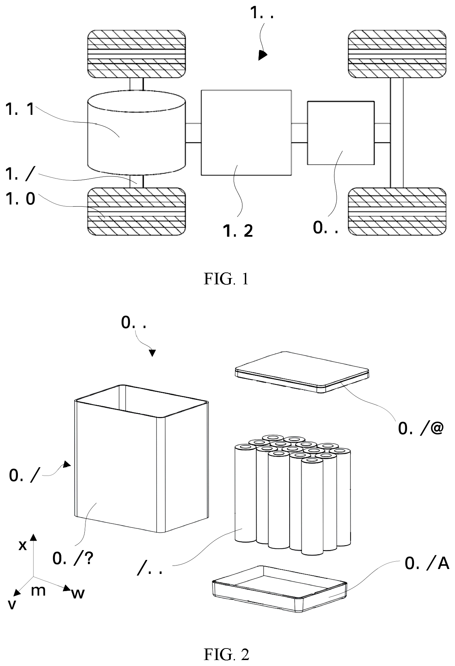

As shown in FIG. 1, the electric device may be a vehicle 300, such as a new energy vehicle. The new energy vehicle may be a pure electric vehicle, a hybrid vehicle, an extended-range vehicle, or the like. Alternatively, the electric device may be an unmanned aerial vehicle, a ship, or the like. Specifically, the vehicle 300 may include a vehicle axle 301, wheels 302 connected to the vehicle axle 301, a motor 303, a controller 304, and a battery 200. The motor 303 is configured to drive the vehicle axle 301 to rotate, the controller 304 is configured to control the motor 303 to operate, and the battery 200 may be disposed at the bottom, the head, or the tail of the vehicle 300 and is configured to provide electrical energy for the operation of the motor 303 and other components in the vehicle.

As shown in FIG. 2, the battery 200 includes a case assembly 201 and battery cells 100. In the battery 200, one or a plurality of battery cells 100 may be provided. If a plurality of battery cells 100 are provided, the plurality of battery cells 100 may be connected in series, in parallel, or in series-parallel. The series-parallel connection means that both series connection and parallel connection are present for the connection among the plurality of battery cells 100. The situation may be that the plurality of battery cells 100 are first connected in series, in parallel, or in series-parallel to form battery modules, and then the plurality of battery modules are connected in series, in parallel, or in series-parallel to form a whole and accommodated in the case assembly 201. The situation may also be that all the battery cells 100 are directly connected in series, in parallel, or in series-parallel, and then the whole formed by all the battery cells 100 is accommodated in the case assembly 201.

The case assembly 201 may be a part of the battery pack, and the case assembly 201 is detachably mounted in the electric device. Alternatively, the case assembly 201 may also be a space formed by a structural member in the electric device for accommodating the battery cells 100. For example, when the battery cells 100 are used in the vehicle 300, the case assembly 201 is a space formed by the vehicle frame for accommodating the battery cells 100.

The case assembly 201 is hollow inside and is configured to accommodate one or a plurality of battery cells 100. The case assembly 201 may also have different shapes and dimensions according to the shape, number, and combination mode of the accommodated battery cells 100, and other requirements. For example, the case assembly 201 may include: a case 201A, a first cover body 201B, and a second cover body 201C. Two ends of the case 201A are provided with openings, and the first cover body 201B and the second cover body 201C are configured to close the openings at the two ends of the case 201A. In FIG. 2, the case 201A is of a rectangular tubular structure according to the arrangement mode of the plurality of battery cells 100. To facilitate maintenance of the battery 200, the case assembly 201 is detachably mounted in the electric device.

The battery cell 100 may be a secondary battery, which refers to a battery cell 100 that can continue to be used by activating the active material through charging after the battery cell 100 is discharged.

The battery cell 100 may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, or the like. This is not limited in the embodiments of the present application.

As an example, the battery cell 100 may be a cylindrical battery cell, a prismatic battery cell, a pouch battery cell, or a battery cell of other shapes. The prismatic battery cell includes a square-shell battery cell, a blade-shaped battery cell, and a polygonal prismatic battery, and the polygonal prismatic battery is, for example, a hexagonal prismatic battery. This is not particularly limited in the present application.

The following description is illustrated by taking a cylindrical battery cell 100 as an example, but the present application is also applicable to battery cells of other shapes. A plurality of battery cells 100 may be disposed in an xoy plane perpendicular to a first direction z. The plurality of battery cells 100 may be arranged in a rectangular array in a second direction x and a third direction y, the second direction x being perpendicular to the third direction y.

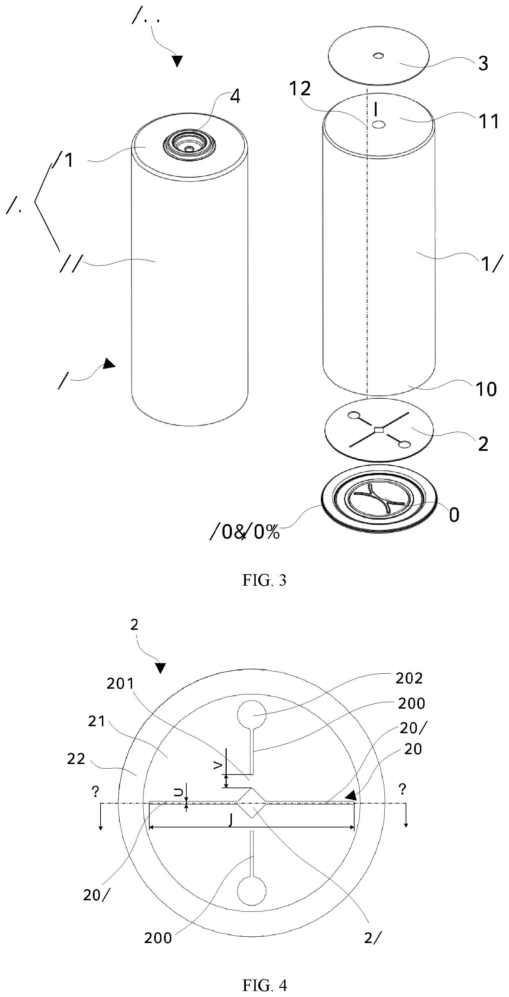

FIG. 3 is an exploded view of some embodiments of a battery cell according to the present application, and FIG. 4 is a schematic structural diagram of some embodiments of a first flow collecting member. In some embodiments, the battery cell 100 includes: a shell 1, including a first wall 12, where the first wall 12 is provided with a pressure relief component 2; an electrode assembly 3, disposed in the shell 1, where the electrode assembly 3 includes an electrode main body 31 and a first tab 32, and the first tab 32 is led out from one end of the electrode main body 31; and a first flow collecting member 4, configured to electrically connect the first tab 32 to the shell 1, where the first flow collecting member 4 is at least partially located between the first tab 32 and the pressure relief component 2, the first flow collecting member 4 is provided with at least one venting part 41 and at least one guiding part 42, the venting part 41 penetrates through the first flow collecting member 4 in the thickness direction of the first wall 12, and the guiding part 42 is disposed in the outer peripheral region of the venting part 41.

The shell 1 is of a thin-walled hollow structure and is configured to accommodate the electrode assembly 3 and an electrolyte. The shell 1 may be a steel shell, an aluminum shell, a composite metal shell (such as a copper-aluminum composite shell), an aluminum-plastic film, or the like. The shell 1 may be cylindrical and includes a first wall 12, a second wall, and a side wall 11. The first wall 12 and the second wall are disposed opposite to each other, and the side wall 11 is connected between the first wall 12 and the second wall.

The pressure relief component 2 is disposed on the first wall 12, and the pressure relief component 2 and the first wall 12 may be integrally formed. For example, the pressure relief component 2 is formed by providing a score on the inner surface or the outer surface of the first wall 12. Alternatively, the pressure relief component 2 and the first wall 12 are of a split-type structure, and the pressure relief component 2 is separately processed in advance and then fixed to the first wall 12 by welding or other methods.

The pressure relief component 2 refers to an element or a component that is actuated to relieve the internal pressure or temperature of the battery cell 100 when the internal pressure or temperature reaches a preset threshold. The designed threshold varies according to different design requirements. The threshold may depend on the material of one or more of the positive electrode plate, the negative electrode plate, the electrolytic solution, and the separation film in the battery cell. The pressure relief component 2 may take the form of an anti-explosion valve, a gas valve, a pressure relief valve, a safety valve, or the like, and may specifically adopt a pressure-sensitive or temperature-sensitive element or configuration. That is, when the internal pressure or temperature of the battery cell 100 reaches a preset threshold, the pressure relief component 2 is actuated or the weak structure provided in the pressure relief component 2 is damaged, thereby forming an opening or a channel for relieving the internal pressure or temperature of the battery cell 100.

The term "actuate" mentioned herein means that the pressure relief component 2 generates an action or is activated to a certain state to allow the relief of the internal pressure and temperature of the battery cell 100. The actions generated by the pressure relief component 2 may include, but are not limited to: crack, breakage, tearing, or opening of at least a part of the pressure relief component 2. When the pressure relief component 2 is actuated, the discharged substances inside the battery cell 100 are discharged outward from the actuated part. In this way, the battery cell 100 can undergo pressure relief and temperature relief under the condition of controllable pressure or temperature, thereby preventing potentially more severe accidents. The discharged substances from the battery cell 100 include, but are not limited to: the electrolytic solution, dissolved or split positive and negative electrode plates, fragments of separation film, the high-temperature and high-pressure gas generated by reaction (such as CH4, CO, and other flammable gases), flame, and the like.

The electrode assembly 3 is formed into a wound structure by winding the first electrode plate and the second electrode plate having opposite polarities around a winding axis K. The winding axis K is consistent with the first direction z, and a separating member, such as a separator, is usually disposed between the first electrode plate and the second electrode plate. For a cylindrical battery cell 100, the wound electrode assembly 3 may be cylindrical; for a rectangular parallelepiped-shaped battery cell 100, the wound electrode assembly 3 may be flat.

The parts of the first electrode plate and the second electrode plate that are coated with an active substance constitute the electrode main body 31. The electrode main body 31 is provided with a central hole 34 extending along the winding axis K and configured to accommodate the electrolytic solution or serve as a venting channel during pressure relief. The parts of the first electrode plate and the second electrode plate that are not coated with an active substance each constitute the first tab 32 and the second tab 33. One of the first tab 32 and the second tab 33 is a negative electrode tab, and the other is a positive electrode tab. The first tab 32 and the second tab 33 are led out from two ends of the electrode main body 31, respectively.

The first flow collecting member 4 is configured to electrically connect the first tab 32 to the first wall 12, and the first flow collecting member 4 is located between the first tab 32 and the first wall 12. The "electrical connection" mentioned herein may be achieved by welding, such as laser welding. The first flow collecting member 4 may be of a thin plate structure. For example, a thin plate with a uniform thickness is used, or a part of the thin plate is provided with a concave-convex or bent structure or the like. For the cylindrical battery cell 100, the first flow collecting member 4 may be disk-shaped.

The first flow collecting member 4 is provided with a venting part 41 and a guiding part 42. The venting part 41 penetrates in the thickness direction of the first flow collecting member 4 to form a channel for discharging the gas in the electrode assembly 3 to the pressure relief component 2. The venting part 41 may be in a circular shape, an elliptical shape, a polygonal shape, or the like. One or a plurality of venting parts 41 may be provided.

The guiding part 42 is disposed in the outer peripheral region of the venting part 41, and the guiding part 42 may be spaced apart from the venting part 41 or may be in communication with the venting part 41. The shape of the guiding part may be designed based on the objective of facilitating the arrival of the gas at the pressure relief component 2. The guiding part 42 is configured to enable the formation of a strength reduced region in the first flow collecting member 4, so as to guide the first flow collecting member 4 to crack during pressure relief, thereby increasing the gas discharge area and achieving gas discharge together with the venting part 41. When a plurality of guiding parts 42 are provided, the plurality of guiding parts may be uniformly distributed on the first flow collecting member 4 to achieve uniform strength at each part and facilitate the guiding of gas from the central region to the periphery. For example, the guiding part 42 may be in a circular shape, an elliptical shape, a polygonal shape, or the like, or in an elongated shape extending in a straight or curved path.

In the embodiments, the first flow collecting member 4 close to the pressure relief component 2 is provided with the venting part 41 and the guiding part 42, such that during pressure relief, the guiding part 42 weakens the structural strength of the first flow collecting member 4, and when the air pressure is high, the first flow collecting member 4 can be guided to crack according to the preset path to cause deformation or damage, thereby increasing the gas discharge area. The gas can be discharged simultaneously through the venting part 41 and the guiding part 42, such that the ventilation area when the gas in the electrode assembly 3 reaches the pressure relief component 2 is increased, thereby preventing blockage during pressure relief, enabling the gas to reach the pressure relief component 2 more smoothly to be discharged out of the battery cell 100, enabling the air pressure inside and outside the battery cell 100 to be balanced, allowing the heat to be discharged in time, and thus improving the safety of the battery cell 100 during use.

In some embodiments, the venting part 41 is disposed in the central region of the first flow collecting member 4.

One or a plurality of venting parts 41 are disposed in the central region of the first flow collecting member 4. The venting part 41 may be aligned with the central hole 34 of the electrode assembly 3, and the area of at least one venting part 41 may be close to the area of the central hole 34. The "central region" mentioned herein is not limited to the true center. For example, a processing error causes the venting part 41 to deviate from the true center. Alternatively, a plurality of venting parts 41 are provided, and the plurality of venting parts 41 are distributed in a central region within a certain range, but the true center is not necessarily provided with the venting part 41. For example, the plurality of venting parts 41 are spaced apart from each other along an annular shape, or one venting part 41 is provided at the true center on this basis.

In the embodiments, the venting part 41 is disposed in the central region of the first flow collecting member 4, such that part of the gas discharged along the central hole 34 of the electrode assembly 3 can directly pass through the venting part 41 to reach the pressure relief component 2, thereby reducing the pressure relief resistance during thermal runaway of the battery cell 100 and improving the gas discharge efficiency. In addition, the venting part 41 provided in the central region facilitates the cracking of the guiding part 42 located in the outer peripheral region to cause deformation or damage during gas discharge, such that the venting part 41 and the guiding part 42 jointly achieve a better pressure relief effect.

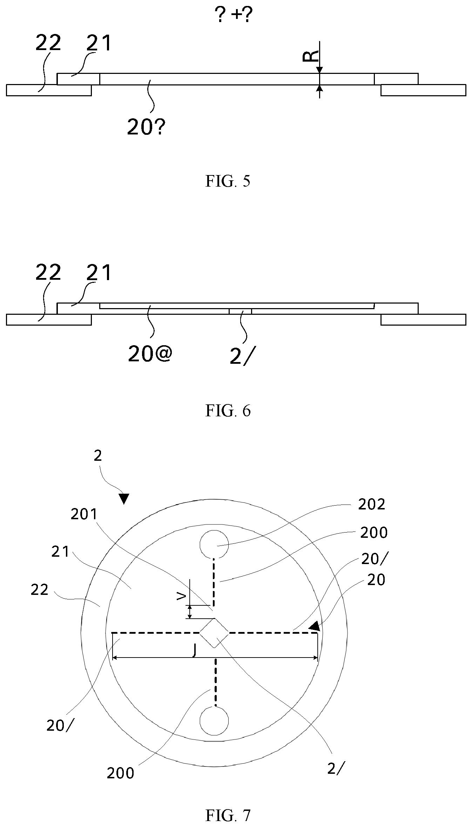

In some embodiments, as shown in FIG. 5, the guiding part 42 includes at least one of a through hole 42A or a score 42B.

As shown in FIG. 5, the guiding part 42 includes a through hole 42A. The through hole 42A penetrates in the thickness direction of the first flow collecting member 4. The through hole 42A is in an elongated shape extending in a straight or curved trajectory, and the through hole extending along a straight line can reduce the resistance when the gas flows, which facilitates processing. Alternatively, the through hole may be in a circular shape, an elliptical shape, a polygonal shape, or other irregular structures.

Configuring the guiding part 42 in an elongated shape has the following advantages: On the basis of guiding the first flow collecting member 4 to crack and increasing the gas discharge area, since the guiding part 42 has a small width dimension in the direction perpendicular to the extension direction of the guiding part, it is easier to ensure the structural strength of the first flow collecting member 4 under normal use, and the first flow collecting member is less prone to deformation, which can improve the reliability of the electrical connection between the first tab 32 and the first flow collecting member 4. In addition, when the first tab 32 is electrically connected to the first flow collecting member 4 by welding, the impact on the welding area can be reduced. If the welding trajectory avoids the guiding part 42, the area and uniformity of the distribution of the welding trajectory on the end surface of the first tab 32 can also be ensured, which can improve the reliability of the electrical connection between the first tab 32 and the first flow collecting member 4.

As shown in FIG. 6, the guiding part 42 includes a score 42B. The score 42B may be provided on the side of the first flow collecting member 4 close to the first wall 12, or may be provided on the side of the first flow collecting member 4 close to the first tab 32. The score 42B is provided in a part of the thickness of the first flow collecting member 4 and does not penetrate through the entire thickness. By providing the score 42B, a thickness reduced part is formed. The score 42B may be in an elongated shape extending in a straight or curved trajectory.

As shown in FIG. 7, the guiding part 42 of FIGs. 5 and 6 extends in a continuous trajectory, and FIG. 7 differs in that the guiding part 42 extends in a discontinuous trajectory to form a dashed line, and the guiding part 42 is formed by the through hole 42A or the score 42B, or is formed by the combination of the through hole 42A and the score 42B.

In the same first flow collecting member 4, only one type of guiding part 42 may be provided, or a combination of two or more types of guiding parts 42 may be provided.

In the embodiments, the guiding part 42 is configured as a through hole 42A. In the case of thermal runaway, it is easier for the gas to directly enter the through hole 42A from the venting part 41, so as to rapidly diffuse to the surrounding region, which is conducive to increasing the gas discharge speed. When the air pressure inside the battery cell 100 is relatively low, the through hole 42A can also fully play its role, thereby enabling the gas to reach the pressure relief component 2 more smoothly for discharge, enabling the air pressure inside and outside the battery cell 100 to be balanced, and thus improving the safety of the battery cell 100 during use.

Alternatively, the guiding part 42 is configured as a score 42B, such that the weakening of the strength of the first flow collecting member 4 can be reduced, which is conducive to ensuring the strength of the first flow collecting member 4. In addition, in the case of thermal runaway, a strength reduced region is formed at the score 42B, and the first flow collecting member 4 may crack along the score 42B, or may further deform at the score 42B. For example, two sides of the score 42B are at different heights, such that the gas discharge area can be effectively increased, thereby enabling the gas to reach the pressure relief component 2 more smoothly for discharge, enabling the air pressure inside and outside the battery cell 100 to be balanced, and thus improving the safety of the battery cell 100 during use.

In some embodiments, as shown in FIG. 4, the guiding part 42 extends in the radial direction of the first flow collecting member 4.

When a plurality of guiding parts 42 are provided, the plurality of guiding parts 42 may form a radial shape.

Optionally, the guiding part 42 may also extend in the circumferential direction of the first flow collecting member 4 or in other directions. For example, the plurality of guiding parts 42 all extend in the circumferential direction and are distributed at different radial positions. Guiding parts 42 at adjacent radial positions may be disposed in a staggered manner, and one or a plurality of guiding parts 42 may be disposed at the same radial position.

In the embodiments, the guiding part 42 extends in the radial direction of the first flow collecting member 4, which is conducive to guiding the gas from the central region of the first flow collecting member 4 to the outer periphery, such that the gas can be quickly released to prevent accumulation. As a result, the gas pressure near the venting part 41 can be reduced, and the gas discharge speed can be increased, thereby enabling the gas to reach the pressure relief component 2 more smoothly to be discharged out of the battery cell 100, enabling the air pressure inside and outside the battery cell 100 to be balanced, and thus improving the safety of the battery cell 100 during use.

In addition, for a wound electrode assembly 3, the first tab 32 is of a multi-layer structure. To ensure that each layer of tab can be reliably welded, at least part of the weld mark is disposed in the radial direction. Such a guiding part 42 facilitates disposing the weld mark on the first flow collecting member 4.

In some embodiments, as shown in FIG. 4, the at least one guiding part 42 includes a first guiding part 421, and a first end of the first guiding part 421 close to the venting part 41 is in communication with the venting part 41.

The first end of the guiding part 42 is in communication with the venting part 41, and a preset spacing is provided between the second end of the guiding part 42 and the outer edge of the first flow collecting member 4.

In the embodiments, after the gas reaches the venting part 41 from the central hole 34 of the electrode assembly 3, the gas can directly act on the first end of the guiding part 42, which is beneficial for the first flow collecting member 4 to deform or crack under the guidance of the guiding part 42, such that the gas directly enters the guiding part 42 along the communication position between the guiding part 42 and the venting part 41, thereby substantially achieving simultaneous gas discharge through the venting part 41 and the guiding part 42 in communication with the venting part, and increasing the gas discharge speed.

In some embodiments, two first guiding parts 421 are located on the same straight line, and the first ends of the two first guiding parts 421 close to the venting part 41 are both in communication with the venting part 41.

The at least one guiding part 42 may include only two first guiding parts 421 located on the same straight line, or the at least one guiding part 42 includes an even number of first guiding parts 421, such as four or six first guiding parts, and each pair of first guiding parts 421 is located on the same straight line.

In the embodiments, two first guiding parts 421 are located on the same straight line. After the gas reaches the venting part 41 from the central hole 34 of the electrode assembly 3, the deformed or cracked region, for gas discharge, on the first flow collecting member 4 is symmetrical, thereby enabling the gas of the first flow collecting member 4 in the circumferential direction to be evenly distributed, preventing the pressure rise caused by the gas accumulation on the same side, enabling the gas to reach the pressure relief component 2 more smoothly for discharge, and enabling the air pressure inside and outside the battery cell 100 to be balanced.

In some embodiments, as shown in FIG. 4, the at least one guiding part 42 includes a second guiding part 422, and a preset spacer part 423 is disposed between the first end of the second guiding part 422 close to the venting part 41 and the side wall of the venting part 41; that is, the first end of the second guiding part 422 is not in communication with the venting part 41.

In the embodiments, on the basis of increasing the gas discharge area by providing the guiding part 42, the preset spacer part 423 is disposed between the second guiding part 422 and the venting part 41, which is conducive to improving the structural strength of the first flow collecting member 4.

In some embodiments, two second guiding parts 422 are located on the same straight line, and preset spacer parts 423 are disposed between first ends of the two second guiding parts 422 and the side wall of the venting part 41.

The lengths X of the preset spacer parts 423 corresponding to the two second guiding parts 422 located on the same straight line may be the same, forming a symmetrical structure, or the lengths X of the two preset spacer parts 423 are different.

As shown in FIG. 4, the plurality of guiding parts 42 include both the first guiding part 421 and the second guiding part 422. The first guiding part 421 and the second guiding part 422 may both extend in the radial direction. For example, two first guiding parts 421 and two second guiding parts 422 are evenly spaced apart from each other on the first flow collecting member 4 in the circumferential direction. The venting part 41 is square, the first ends of the two first guiding parts 421 are respectively in communication with the left vertex and the right vertex of the venting part 41, and preset spacer parts 423 are disposed between the first ends of the two second guiding parts 422 and the upper vertex and lower vertex of the venting part 41. Therefore, the first guiding parts 421 and the second guiding parts 422 are alternately disposed in the circumferential direction, such that the strength distribution of the first flow collecting member 4 in the circumferential direction can be uniform.

In this structure, the first guiding part 421 of the plurality of guiding parts 42 is in communication with the venting part 41, such that after reaching the venting part 41 from the central hole 34 of the electrode assembly 3, the gas can directly enter the first guiding part 421 along the communication position between the guiding part 42 and the venting part 41, thereby increasing the gas discharge speed. The first end of the second guiding part 422 and the side wall of the venting part 41 are provided with the preset spacer part 423, which is conducive to ensuring the structural strength of the first flow collecting member 4 in the case where battery cell 100 operates normally and improving the reliability of the electrical connection between the first flow collecting member 4 and the first tab 32. Therefore, this structure balances the gas discharge speed and the structural strength of the first flow collecting member 4, and can improve the safety and reliability of the battery cell 100 during operation.

In the embodiments, two second guiding parts 422 are located on the same straight line, and the preset spacer parts 423 are disposed at the positions opposite to the venting part 41, such that the structural symmetry of the first flow collecting member 4 can be improved, and the strength is more evenly distributed, which is conducive to ensuring the structural strength of the first flow collecting member 4 in the case where the battery cell 100 operates normally and improving the reliability of the electrical connection between the first flow collecting member 4 and the first tab 32.

In some embodiments, the preset spacer part 423 is configured to be ruptured in the case where the air pressure in the shell 1 exceeds a preset threshold.

In the normal working status of the battery cell 100, the second guiding part 422 is connected to the venting part 41 through the preset spacer part 423. In the case of thermal runaway, the connecting material between the second guiding part 422 and the venting part 41 is ruptured under the action of gas pressure and high temperature. The term "damage" mentioned herein may refer to the breaking, twisting, falling off, or the like of the preset spacer part 423.

In the embodiments, the second guiding part 422 is conducive to ensuring the structural strength of the first flow collecting member 4 in the case where the battery cell 100 operates normally, and can also cause rupture to the preset spacer part 423 in the case where the battery cell 100 undergoes thermal runaway, such that the gas reaches the second guiding part 422 more easily from the venting part 41, thereby increasing the gas discharge area and facilitating the smooth discharge of the internal gas.

In some embodiments, the length X of the preset spacer part 423 is less than 15 mm, and the thickness of the preset spacer part 423 is less than 2 mm.

In the embodiments, by limiting the length X and the thickness of the preset spacer part 423, it can be ensured that the preset spacer part reliably cracks in the case where the battery cell 100 undergoes thermal runaway. After reaching the venting part 41 from the central hole 34 of the electrode assembly 3, the gas can enter the second guiding part 422 smoothly, thereby increasing the ventilation area, enabling the gas to reach the pressure relief component 2 more quickly for discharge, enabling the air pressure inside and outside the battery cell 100 to be balanced, and improving the safety of the battery cell 100 during thermal runaway.

In some embodiments, a plurality of guiding parts 42 are provided, and the plurality of guiding parts 42 are spaced apart from each other in the circumferential direction of the first flow collecting member 4.

The plurality of guiding parts 42 are evenly spaced apart from each other in the circumferential direction of the first flow collecting member 4. The number of the guiding parts 42 is selected to not only ensure the structural strength of the first flow collecting member 4 under normal use without affecting the reliable electrical connection between the first flow collecting member 4 and the first tab 32, but also ensure that there is a sufficient ventilation area for the smooth discharge of the gas. For example, two, three, four, or more guiding parts 42 may be provided.

For example, the plurality of guiding parts 42 all extend in the radial direction and are evenly spaced apart from each other in the circumferential direction of the first flow collecting member 4, forming a radial shape.

In the embodiments, the plurality of guiding parts 42 are spaced apart from each other in the circumferential direction of the first flow collecting member 4, which can improve the uniformity of gas discharge in the entire circumferential direction of the first flow collecting member 4, fully utilize different positions in the circumferential direction to discharge gas, and increase the gas discharge speed, such that the gas can reach the pressure relief component 2 more smoothly to be discharged out of the battery cell 100.

In some embodiments, the plurality of guiding parts 42 are centrosymmetrically disposed relative to the center of the first flow collecting member 4.

In the embodiments, the plurality of guiding parts 42 can be more uniformly distributed on the first flow collecting member 4, which can not only enable the structural strength at each part of the first flow collecting member 4 to be uniform, but also enable the gas discharge region to be uniformly distributed, while ensuring the reliability of the electrical connection between the first flow collecting member 4 and the first tab 32 and the gas discharge uniformity.

In some embodiments, the distance between the second ends, away from the venting part 41, of the two guiding parts 42 located on the same straight line is L, the maximum radial dimension of the first flow collecting member 4 is D, and L = 0.1D to 0.8D.

In the embodiments, the length of the guiding part 42 is designed based on the diameter D of the first flow collecting member 4, such that the guiding part 42 can meet the gas discharge speed requirement while ensuring the structural strength of the first flow collecting member 4.

In some embodiments, the thickness of the region, where the guiding part 42 is disposed, of the first flow collecting member 4 is T, the width of the guiding part 42 is W, and W = T to 5T.

As shown in FIG. 5, the first flow collecting member 4 includes a shell connecting part 44 and a tab connecting part 43 stacked in the thickness direction, and the guiding part 42 is disposed on the tab connecting part 43; that is, the thickness of the tab connecting part 43 is T.

In the embodiments, the width W of the guiding part 42 is designed based on the thickness T of the region, where the guiding part 42 is disposed, of the first flow collecting member 4, such that the width W of the guiding part 42 is not less than the thickness T. This can ensure that the guiding part 42 easily cracks during pressure relief and effectively increase the ventilation area, and the width W of the guiding part 42 is not greater than 5 times the thickness T, thereby ensuring the structural strength of the first flow collecting member 4.

In some embodiments, as shown in FIG. 4, the guiding part 42 is provided with a positioning hole 424 at the second end away from the venting part 41.

For example, the positioning hole 424 may be provided as a circular hole, an elliptical hole, a polygonal hole, or the like. The positioning hole 424 is in communication with the second end of the guiding part 42. The positioning hole 424 provides a positioning effect when the first flow collecting member 4 is stacked. For example, a positioning post may be disposed, and the positioning hole 424 passes through the positioning post each time the first flow collecting member 4 is stacked.

In the embodiments, the positioning hole 424 is provided, which can not only further increase the gas discharge area, but also provide a positioning effect in the stacking process after the first flow collecting member 4 is processed, to prevent deflection. During the assembly of the battery cell 100, when an automated pickup apparatus acquires the first flow collecting member 4 and places the first flow collecting member at an end part of the first tab 32, for example, when the first flow collecting member 4 is sucked by a negative pressure mouthpiece, the guiding part 42 of each first flow collecting member 4 can be at the same circumferential position, such that the first flow collecting member 4 and the first tab 32 of each battery cell 100 can be welded according to a preset welding trajectory without the need to readjust the welding trajectory, which can improve the assembly efficiency of the battery cell 100.

In addition, compared with the mode of positioning through the outer periphery of the first flow collecting member 4, positioning through the positioning hole 424 makes it easier to ensure the processing precision due to the small dimension of the positioning hole 424, thereby improving the positioning precision. In addition, the positioning hole 424 is provided at the second end of the guiding part 42, and the distance between the positioning hole and the center is relatively large, which can improve the positioning effect.

In some embodiments, the at least one guiding part 42 includes a plurality of guiding parts 42 extending in the radial direction of the first flow collecting member 4, two guiding parts 42 of the plurality of guiding parts 42 are located on the same straight line, two positioning holes 424 are provided, and the two positioning holes 424 are respectively disposed at the second ends of the two guiding parts 42 on the same straight line.

As shown in FIG. 4, the second ends of the two opposite guiding parts 42 are provided with positioning holes 424, and the second ends of the remaining two guiding parts 42 are not provided with positioning holes 424.

In the embodiments, the positioning hole 424 is provided only at the second end of each of the two guiding parts 42 located on the same straight line, such that a difference can be present between the plurality of guiding parts 42. Therefore, the positioning effect can be better achieved to prevent deflection, and the weakening influence of providing the positioning hole 424 on the strength of the first flow collecting member 4 can also be reduced.

Optionally, if the second ends of all the guiding parts 42 are provided with the positioning holes 424, or the second ends of all the guiding parts 42 do not need to be provided with the positioning holes 424. With this structure, since there is no positioning structure on the first flow collecting member 4, the pickup apparatus includes a base body, a rotary disk, a photographing component, and a driving component. The rotary disk is rotatably mounted on the base body, and the photographing component and the driving component are both mounted on the base body. During the assembly of the battery cell 100, the photographing component is configured to photograph an image of the first flow collecting member 4 to determine the deflection angle of the first flow collecting member 4 relative to the standard angle position, and the driving component is configured to drive the rotary disk to rotate, such that the first flow collecting member 4 rotates to the standard angle position. Then, the pickup apparatus places the first flow collecting member 4 on the end part of the first tab 32. In this case, the first flow collecting member 4 and the first tab 32 of the battery cell 100 can be welded according to the preset welding trajectory. For example, the pickup apparatus may be a pull mouthpiece.

In some embodiments, the positioning hole 424 is a circular hole, the thickness of the region, where the guiding part 42 is disposed, of the first flow collecting member 4 is T, the diameter of the circular hole is d, and d = 4T to 10T.

In the embodiments, the diameter d of the positioning hole 424 is designed based on the thickness T of the region, where the guiding part 42 is disposed, of the first flow collecting member 4, such that the diameter d of the positioning hole 424 is not less than 4 times the thickness T of the first flow collecting member 4, which can ensure that the dimension of the positioning hole 424 facilitates positioning. In addition, the diameter d of the positioning hole 424 is not greater than 10 times the thickness T of the first flow collecting member 4, which can ensure the structural strength of the first flow collecting member 4.

In some embodiments, the venting part 41 is a polygon, and the first end of the guiding part 42 close to the venting part 41 is aligned with a folded corner region of the venting part 41.

The venting part 41 may be a triangle, a quadrangle, or the like. The folded corner region of the venting part 41 is formed by adjacent inner walls of the venting part 41, and the folded corner protrudes outward away from the venting part 41.

In the embodiments, when the battery cell 100 undergoes thermal runaway and the internal gas is released, the acting force acting on the first flow collecting member 4 can generate stress concentration in the folded corner region of the venting part 41, so as to tear the first flow collecting member 4 from the folded corner of the venting part 41. The first end of the guiding part 42 close to the venting part 41 is aligned with the folded corner region of the venting part 41, such that the acting force generated by the cracking of the folded corner region can be further transmitted to the first end of the guiding part 42, enabling the first flow collecting member 4 to deform or crack in the guiding part 42 region, which can increase the ventilation area of the first flow collecting member 4 during thermal runaway, reduce the blocking of gas, improve the gas discharge smoothness and gas discharge efficiency, reduce the risk of fire and explosion of the battery cell 100 caused by unsmooth pressure relief, and improve the use safety of the battery cell 100.

In some embodiments, a plurality of guiding parts 42 are provided, and the number of the guiding parts 42 is the same as the number of the folded corners of the polygon. The plurality of guiding parts 42 are disposed in one-to-one correspondence with the plurality of folded corners of the polygon.

As shown in FIG. 4, the venting part 41 is a quadrangle, four guiding parts 42 are provided and all extend in the radial direction, and the first ends of the four guiding parts 42 are in one-to-one correspondence with the four folded corners of the quadrangle, respectively.

In the embodiments, one guiding part 42 is disposed at each position corresponding to the folded corner of the venting part 41, such that the stress concentration effect generated at each folded corner can be fully utilized to cause the first flow collecting member 4 to further deform or crack along the guiding part 42, thereby increasing the ventilation area of the first flow collecting member 4 as much as possible during thermal runaway and enabling smoother gas discharge.

In some embodiments, as shown in FIG. 5, the first flow collecting member 4 includes a shell connecting part 44 and a tab connecting part 43 made of different base materials, the shell connecting part 44 and the first wall 12 are made of the same base material, the tab connecting part 43 and the first tab 32 are made of the same base material, and the venting part 41 and the guiding part 42 are disposed on the tab connecting part 43.

The shell connecting part 44 is connected around the outer periphery of the tab connecting part 43, the tab connecting part 43 is electrically connected to the first tab 32, the shell connecting part 44 is electrically connected to the shell 1, and the difference between the thermal expansion coefficient of the material of the shell connecting part 44 and the thermal expansion coefficient of the material of the shell 1 does not exceed the preset threshold. The venting part 41 and the guiding part 42 are both disposed on the tab connecting part 43.

For example, the first wall 12 contains a steel material, and the first tab 32 contains a copper material. If the first flow collecting member 4 is made of a copper material as a whole, after the first wall 12 is welded to the first flow collecting member 4, due to the significant difference between the thermal expansion coefficient of the first wall 12 and the thermal expansion coefficient of the first flow collecting member 4, the inconsistent contraction degrees of the two materials during cooling can easily cause welding cracks, thereby resulting in liquid leakage and affecting the operation reliability of the battery cell 100.

In the present application, the tab connecting part 43 may contain a copper material, and the shell connecting part 44 may contain at least one of a steel material and a nickel material. To prevent rusting, both the tab connecting part 43 and the shell connecting part 44 that is made of a steel material can be nickel-plated. In this way, the difference between the thermal expansion coefficient of the tab connecting part and the thermal expansion coefficient of the shell 1 is small, so cracks are less likely to occur.

As shown in FIG. 5, the tab connecting part 43 and the shell connecting part 44 can be butted in the radial direction and fixed by welding. Alternatively, as shown in FIG. 5, the tab connecting part 43 and the shell connecting part 44 are stacked in the thickness direction, the tab connecting part 43 is disk-shaped, and the shell connecting part 44 is annular. In the height direction of the battery cell 100, the shell connecting part 44 is located on a side of the tab connecting part 43 close to the pressure relief component 2, and the radial outer end of the shell connecting part 44 extends beyond the outer edge of the tab connecting part 43. The venting part 41 and the guiding part 42 are both disposed on the tab connecting part 43, and the guiding part 42 is located on the radial inner side of the inner edge of the shell connecting part 44. The thickness of the tab connecting part 43 and the thickness of the shell connecting part 44 may be kept consistent to facilitate welding.

In the embodiments, after the first wall 12 is welded to the first flow collecting member 4, since the difference between the thermal expansion coefficient of the material of the shell connecting part 44 and the thermal expansion coefficient of the material of the first wall 12 does not exceed the preset threshold, the inconsistent contraction degrees of the two materials during cooling can easily cause welding cracks, thereby preventing the problem of liquid leakage and improving the operation reliability of the battery cell 100.

In some embodiments, the tab connecting part 43 is welded to the first tab 32 to form a weld mark, and the weld mark and the guiding part 42 are spaced apart from each other in the circumferential direction.

The weld mark may be formed by laser welding. For a wound electrode assembly 3, the first tab 32 includes multiple layers of tabs. To reliably weld each layer of tabs, at least part of the weld mark may extend in the radial direction of the first flow collecting member 4. The first flow collecting member 4 may be provided with a plurality of weld marks spaced apart from each other in the circumferential direction, and the weld marks and the guiding part 42 may be spaced apart from each other in the circumferential direction.

In the embodiments, the weld mark and the guiding part 42 are spaced apart from each other in the circumferential direction, which can prevent damage to the guiding part 42 caused by the heat generated during welding, thereby ensuring the structural strength of the first flow collecting member 4 during normal use.

In some embodiments, as shown in FIG. 3, the shell 1 includes a shell body 10 and an end cover 12'. The shell body 10 is provided with an opening, the end cover 12' closes the opening, and the first wall 12 is the end cover 12' or a bottom wall 13 of the shell body 10.

In FIG. 3, a side wall 11 and the bottom wall 13 may be integrally formed, an end of the side wall 11 away from the bottom wall 13 is provided with the opening, the first wall 12 is the end cover 12', the end cover 12' is connected to the side wall 11 by welding or the like, and the pressure relief component 2 is disposed on the end cover 12'. Optionally, the pressure relief component 2 is disposed on the bottom wall 13 of the shell body 10.

In the embodiments, the shell 1 is formed by connecting the shell body 10 and the end cover 12', which can facilitate the mounting of the internal structure.

In some embodiments, the first wall 12 is the end cover 12', the bottom wall 13 is provided with an electrode terminal 6, and the electrode terminal 6 is insulated from the bottom wall 13; the electrode assembly 3 further includes a second tab 33, the second tab 33 is led out from the other end of the electrode main body 31, and the second tab 33 and the first tab 32 have opposite polarities; the battery cell 100 further includes a second flow collecting member 5, and the second flow collecting member 5 is configured to electrically connect the second tab 33 to the electrode terminal 6.

The end cover 12' may serve as a first electrode lead-out part, and the electrode terminal 6 may protrude from the bottom wall 13 to serve as a second electrode lead-out part. The first electrode lead-out part and the second electrode lead-out part have opposite polarities. Generally, the electrode terminal 6 is a positive electrode, and the end cover 12' is a negative electrode.

The second flow collecting member 5 is located between the second tab 33 and the electrode terminal 6; that is, the second flow collecting member 5 is located between the second tab 33 and the bottom wall 13. The "electrical connection" mentioned herein may be implemented by welding, such as laser welding. The second flow collecting member 5 may also be of a thin plate structure. For example, a thin plate with a uniform thickness is used, or a part of the thin plate is provided with a concave-convex or bent structure or the like. For the cylindrical battery cell 100, the second flow collecting member 5 may be disk-shaped.

In the battery cell 100 according to the embodiments, the electrode terminal 6 is disposed at an end away from the pressure relief component 2. In the case of thermal runaway, the discharged substances will be ejected from the end where the pressure relief component 2 is located and move away from the electrode terminal 6, thereby moving away from a busbar member configured to electrically connect a plurality of battery cells 100, which can reduce the impact on the electrical connection of the battery cells 100 during thermal runaway.

In some specific embodiments, as shown in FIGs. 1 to 5, the battery cell 100 includes: a shell 1, an electrode assembly 3, a first flow collecting member 4, a second flow collecting member 5, and an electrode terminal. The shell 1 includes a shell body 10 and an end cover 12'. The end cover 12' is configured to close an opening of the shell body 10. The shell body 10 includes a side wall 11 and a bottom wall 13, the bottom wall 13 is located at an end away from the end cover 12', and the end cover 12' serves as a first wall 12 on which a pressure relief component 2 is disposed. The bottom wall 13 is provided with an electrode terminal 6. The end cover 12' serves as a first electrode lead-out part, and the electrode terminal 6 serves as a second electrode lead-out part insulated from the bottom wall 13.

The electrode assembly 3 is disposed in the shell 1. The electrode assembly 3 includes an electrode main body 31, a first tab 32, and a second tab 33, and the first tab 32 and the second tab 33 are led out from two ends of the electrode main body 31, respectively. The first flow collecting member 4 is configured to electrically connect the first tab 32 to the first wall 12, and the first flow collecting member 4 is located between the first tab 32 and the first wall 12. The second flow collecting member 5 is configured to electrically connect the second tab 33 to the electrode terminal 6, and the second flow collecting member 5 is located between the second tab 33 and the bottom wall 13.

The first flow collecting member 4 includes a tab connecting part 43 and a shell connecting part 44 stacked in the thickness direction, the tab connecting part 43 is disk-shaped, and the shell connecting part 44 is annular. The shell connecting part 44 is located on a side of the tab connecting part 43 close to the pressure relief component 2, and the radial outer end of the shell connecting part 44 extends beyond the outer edge of the tab connecting part 43. A venting part 41 and a guiding part 42 are both disposed on the tab connecting part 43, and the venting part 41 is disposed in the central region of the first flow collecting member 4. At least one guiding part 42 includes a plurality of guiding parts 42 evenly disposed in the circumferential direction, and each guiding part 42 extends in the radial direction. For example, four guiding parts 42 are provided. The second ends of two opposite second guiding parts 422 are each provided with a positioning hole 424, and a preset spacer part 423 is formed between the first ends of the two second guiding parts 422 and the side wall of the venting part 41. The first ends of two opposite first guiding parts 421 are both in communication with the venting part 41, and the second ends thereof are not provided with the positioning holes 424. The length of the second guiding part 422 may be less than that of the first guiding part 421.

Although the present application has been described with reference to preferred embodiments, various modifications can be made and components can be replaced with equivalents without departing from the scope of the present application. In particular, the technical features mentioned in the embodiments can be combined in any manner, provided that there is no structural conflict. The present application is not limited to the specific embodiments disclosed herein, but encompasses all technical solutions falling within the scope of the claims.

## Claims

1. A battery cell, comprising:
a shell (1), comprising a first wall (12), wherein the first wall (12) is provided with a pressure relief component (2);
an electrode assembly (3), disposed in the shell (1), wherein the electrode assembly (3) comprises an electrode main body (31) and a first tab (32), and the first tab (32) is led out from one end of the electrode main body (31); and
a first flow collecting member (4), configured to electrically connect the first tab (32) to the shell (1), wherein the first flow collecting member (4) is at least partially located between the first tab (32) and the pressure relief component (2); the first flow collecting member (4) is provided with at least one venting part (41) and at least one guiding part (42), the venting part (41) penetrates through the first flow collecting member (4) in a thickness direction of the first wall (12), and the guiding part (42) is disposed in an outer peripheral region of the venting part (41).

2. The battery cell according to claim 1, wherein the guiding part (42) comprises at least one of a through hole (42A) or a score (42B).

3. The battery cell according to claim 1 or 2, wherein the guiding part (42) extends in a radial direction of the first flow collecting member (4).

4. The battery cell according to any one of claims 1 to 3, wherein the at least one guiding part (42) comprises a first guiding part (421), and a first end, close to the venting part (41), of the first guiding part (421) is in communication with the venting part (41).

5. The battery cell according to claim 4, wherein two first guiding parts (421) are located on a same straight line, and first ends, close to the venting part (41), of the two first guiding parts (421) are both in communication with the venting part (41).

6. The battery cell according to any one of claims 1 to 5, wherein the at least one guiding part (42) comprises a second guiding part (422), and a preset spacer part (423) is disposed between a first end, close to the venting part (41), of the second guiding part (422) and a side wall of the venting part (41).

7. The battery cell according to claim 6, wherein two second guiding parts (422) are located on a same straight line, and a preset spacer part (423) is disposed between the first end of each of the two second guiding parts (422) and the side wall of the venting part (41).

8. The battery cell according to claim 6 or 7, wherein the preset spacer part (423) is configured to be ruptured in a case where an air pressure in the shell (1) exceeds a preset threshold.

9. The battery cell according to any one of claims 6 to 8, wherein a length (X) of the preset spacer part (423) is less than 15 mm, and a thickness of the preset spacer part (423) is less than 2 mm.

10. The battery cell according to any one of claims 1 to 9, wherein a plurality of guiding parts (42) are spaced apart from each other in a circumferential direction of the first flow collecting member (4).

11. The battery cell according to claim 10, wherein the plurality of guiding parts (42) are centrosymmetrically disposed relative to a center of the first flow collecting member (4).

12. The battery cell according to claim 11, wherein a distance between second ends, away from the venting part (41), of two guiding parts (42) located on a same straight line is L, a maximum radial dimension of the first flow collecting member (4) is D, and L = 0.1D to 0.8D.

13. The battery cell according to claim 12, wherein a thickness of a region, where the guiding part (42) is disposed, of the first flow collecting member (4) is T, a width of the guiding part (42) is W, and W = T to 5T.

14. The battery cell according to any one of claims 1 to 13, wherein the first flow collecting member (4) is provided with a positioning hole (424) at a second end away from the venting part (41).

15. The battery cell according to claim 14, wherein the at least one guiding part (42) comprises a plurality of guiding parts (42) extending in a radial direction of the first flow collecting member (4), and two guiding parts (42) of the plurality of guiding parts (42) are located on a same straight line; two positioning holes (424) are provided, and the two positioning holes (424) are respectively disposed at second ends of the two guiding parts (42) on the same straight line.

16. The battery cell according to claim 15, wherein the positioning hole (424) is a circular hole; a thickness of a region, where the guiding part (42) is disposed, of the first flow collecting member (4) is T, a diameter of the circular hole is d, and d = 4T to 10T.

17. The battery cell according to any one of claims 1 to 16, wherein the venting part (41) is a polygon, and a first end, close to the venting part (41), of the guiding part (42) is aligned with a folded corner region of the venting part (41).

18. The battery cell according to claim 17, wherein a plurality of guiding parts (42) are provided, and a number of the guiding parts (42) is the same as a number of folded corners of the polygon; the plurality of guiding parts (42) are disposed in one-to-one correspondence with a plurality of folded corners of the polygon.

19. The battery cell according to any one of claims 1 to 18, wherein a first flow collecting member (4) comprises a shell connecting part (44) and a tab connecting part (43) made of different base materials, the shell connecting part (44) and a first wall (12) are made of a same base material, and the tab connecting part (43) and the first tab (32) are made of a same base material; the venting part (41) and the guiding part (42) are disposed on the tab connecting part (43).

20. The battery cell according to any one of claims 1 to 19, wherein the tab connecting part (43) is welded to the first tab (32) to form a weld mark, and the weld mark and the guiding part (42) are spaced apart from each other in a circumferential direction.

21. The battery cell according to any one of claims 1 to 20, wherein the venting part (41) is disposed in a central region of the first flow collecting member (4).

22. The battery cell according to any one of claims 1 to 21, wherein the shell (1) comprises a shell body (10) and an end cover (12'), the shell body (10) is provided with an opening, and the end cover (12') closes the opening; the first wall (12) is the end cover (12') or a bottom wall (13) of the shell body (10).

23. The battery cell according to claim 22, wherein the first wall (12) is the end cover (12'), the bottom wall (13) is provided with an electrode terminal (6), and the electrode terminal (6) is insulated from the bottom wall (13); the electrode assembly (3) further comprises a second tab (33), the second tab (33) is led out from the other end of the electrode main body (31), and the second tab (33) and the first tab (32) have opposite polarities; the battery cell (100) further comprises a second flow collecting member (5), and the second flow collecting member (5) is configured to electrically connect the second tab (33) to the electrode terminal (6).

24. A battery, comprising the battery cell (100) according to any one of claims 1 to 23.

25. An electric device, comprising the battery cell (100) according to any one of claims 1 to 23 and/or the battery (200) according to claim 24, wherein the battery cell and/or the battery is configured to provide electrical energy for the electric device.
